Europäisches Patentamt

(19) European Patent Office

Office européen des brevets

(11) Numéro de publication: **0 175 622**
**B1**

(12) **FASCICULE DE BREVET EUROPEEN**

(45) Date de publication du fascicule du brevet: **02.01.91**

(21) Numéro de dépôt: **85401816.5**

(22) Date de dépôt: **19.09.85**

(51) Int. Cl.⁵: **G 01 N 21/88, G 02 B 27/02**

(54) **Cabine de contrôle de vitrages revêtus d'un couche mince d'oxyde métallique.**

(30) Priorité: **19.09.84 FR 8414344**

(43) Date de publication de la demande:
**26.03.86 Bulletin 86/13**

(45) Mention de la délivrance du brevet:
**02.01.91 Bulletin 91/01**

(84) Etats contractants désignés:
**BE DE FR IT LU NL SE**

(56) Documents cités:
**US-A-1 956 165**
**US-A-2 015 730**
**US-A-4 182 575**

(73) Titulaire: **SAINT-GOBAIN VITRAGE**
**INTERNATIONAL**
**18, avenue d'Alsace**
**F-92400 Courbevoie (FR)**

(72) Inventeur: **Neuzillet, Désiré**
**11 rue Morinet**
**F-71100 Chalon sur Saone (FR)**
Inventeur: **de Toytot, Francois**
**15 rue de Vogué**
**F-60150 Thourotte (FR)**

(74) Mandataire: **Leconte, Jean-Gérard et al**
**Saint-Gobain Recherche 39, Quai Lucien Lefranc**
**F-93304 Aubervilliers Cedex (FR)**

Courier Press, Leamington Spa, England.

**Description**

La présente invention concerne le contrôle de substrats, notamment en verre, revêtus d'une couche mince en particulier d'oxyde métallique.

On réalise des couches minces sur des plaques ou rubans de verre, notamment couches à base de $SnO_2$ dans des épaisseurs où ces couches sont interférentielles et où les variations d'épaisseur induisent rapidement des variations de teinte.

L'appréciation de la qualité de ces couches, en particulier leur uniformité de teinte rendant compte de la constance de leur épaisseur, se fait en partie par observation à l'oeil.

La meilleure observation qui rende le mieux compte de l'effet que produisent les vitrages ainsi fabriqués est une observation au jour, à l'extérieur, car en atelier se réfléchissent sur le verre revêtu, toutes les superstructures environnantes de l'atelier.

Avant de pouvoir observer les vitrages à l'extérieur, il serait toutefois bon de les observer au préalable sur les lieux de leur fabrication, au cours de la fabrication, en particulier pour réagir le plus rapidement possible sur les conditions de fabrication au cas où la qualité observée ne serait pas satisfaisante.

En outre, une telle observation aurait l'avantage de ne pas être tributaire des variations diurnes ou saisonnières d'éclairement de la voûte céleste.

On a déjà décrit des appareils pour contrôler le verre. Ainsi, le brevet US-A-1 956 165 décrit l'observation d'une feuille de verre pour déterminer la présence de défauts. La feuille, placée sur une table d'observation, est examinée sous un éclairage provenant d'une source de lumière placée derrière une plaque de verre à surface diffusante disposée pratiquement perpendiculairement à la table d'observation. Par inclinaison de la feuille de verre à étudier, celle-ci peut être observée sous différents angles.

Le brevet US-A-2 015 730 décrit un dispositif pour observer une feuille de verre posée sur une table d'observation qui est éclairée par plusieurs sources de lumière disposées dans un plan pratiquement perpendiculaire à la table. Ce brevet concerne plus particulièrement des moyens pour empêcher un éclairage direct de la feuille de verre et des réflecteurs permettant d'éclairer indirectement cette feuille de verre.

Le brevet US-A-4 182 575 décrit un appareil pour détecter les défauts pouvant apparaître dans un ruban de verre plat. Cet appareil comprend un écran d'observation disposé au-dessus du ruban de verre perpendiculairement au plan de ce dernier et un système optique, comprenant une source de lumière et un miroir, disposé sous le ruban de verre. La lumière émise par la source est réfléchie par le miroir suivant une direction inclinée par rapport au plan du ruban de verre et est projetée sur l'écran d'observation, après avoir traversé le ruban de verre.

L'invention vise à fournir des moyens d'observation de vitrages revêtus, tels qu'ils possèdent une surface entourant le verre, apte à se réfléchir sur le verre de la même façon qu'un ciel couvert, qui, comme bien connu, est très discriminant pour la détection des défauts des couches interférentielles (irrisations, hétérogénéités de teinte).

L'invention propose pour cela une cabine de contrôle (1) de la qualité de substrats (2) en verre revêtus de couches minces d'oxyde métallique par observation du substrat sous un angle d'incidence moyen de l'ordre de 30°, cet angle moyen étant l'angle que fait, avec la normale au substrat, le rayon issu de l'oeil de l'observateur en direction du centre de la partie du substrat à observer. Elle est caractérisée en ce qu'elle comprend:

une voûte (4) surplombant le substrat (2) revêtu à observer et s'y réfléchissant, cette voûte (4) étant continue, courbée, de rayon de courbure variable de façon monotone et continue ou constante, recouverte d'un revêtement opaque mât diffusant, de couleur neutre proche en reflexion de l'illuminant $D_{65}$ de la C.I.E., éclairée de façon uniforme par des sources (6, 7) de longueur d'onde dominante proche de celle de l'illuminant $D_{65}$.

Un poste d'observation (9) en regard de la voûte (4) tel qu'un observateur (10) qui y est situé voit le substrat (2) à observer sous l'angle d'incidence moyen de l'ordre de 30°.

Pour permettre une meilleure visualisation des couches et de leurs défauts, le fond sur lequel est posé le substrat revêtu à observer, est absorbant et de préférence noir.

Avantageusement, pour permettre l'observation de substrats revêtus, directement sur ligne alors qu'ils défilent à des vitesses pouvant atteindre 20 m/min, et pour que l'observateur ait le temps d'apprécier la qualité, la voûte est de taille telle qu'elle se réfléchit sur une longueur de l'ordre de 3 m face à l'observateur.

Pour permettre une adaptation à la vue des différents observateurs, à la nature de la couche et à la nature des défauts à détecter, l'éclairement de la voûte est à intensité réglable.

Pour faciliter l'appréciation de la qualité des couches, un échantillon de référence est disposé face à l'observateur, sur toute la largeur à observer, sur fond noir et sous une incidence voisine de celle sous laquelle l'observateur voit le substrat à contrôler.

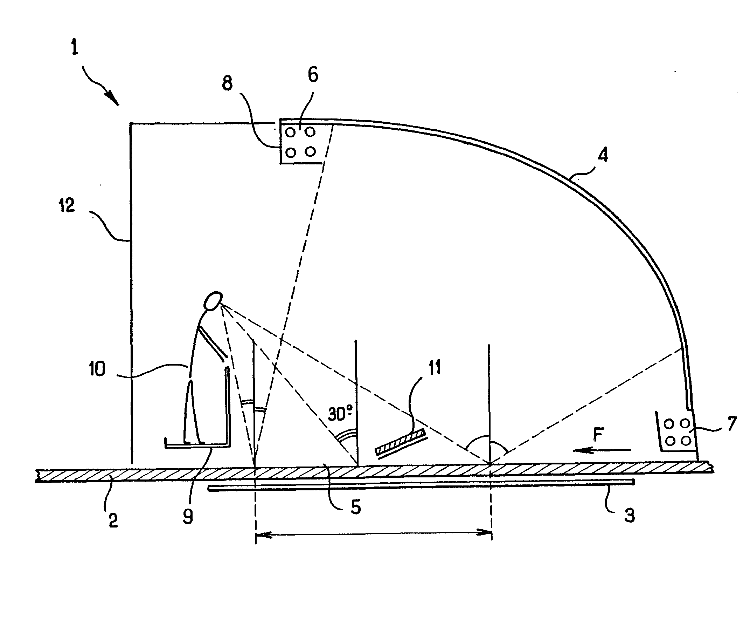

L'invention sera maintenant décrite plus en détail en référence à la figure unique jointe qui représente un schéma d'une cabine d'observation selon l'invention.

La figure montre une vue en coupe d'une cabine 1 d'observation selon l'invention.

Le substrat 2 revêtu, à contrôler, est disposé à plat ou défile dans le sens de la flèche F à l'intérieur de la cabine 1 sur un fond 3 absorbant et de préférence noir, par exemple de feutrine.

La partie supérieure de cette cabine 1, est constitué par une voûte 4 qui se réfléchit au moins sur la partie 5 du substrat 2 à observer. Cette voûte 4 présente une surface opaque, mâte et diffusante de couleur neutre, voisine en réflexion de l'illuminant $D_{65}$ de la C.I.E. éclairée indirectement et de façon uniforme par des sources 6 et 7 de coordonnées trichromatiques sensiblement proches de celles de l'illuminant $D_{65}$ de la C.I.E.

Pour ne pas gêner l'observation, ces sources 6 et 7 sont entourées, sauf sur leur côté regardant la voûte 4 par un bandeau 8. A titre d'exemple on peut choisir comme source lumineuse des rampes de tubes fluorescents d'éclairage du type "lumière du jour de luxe, température de couleur environ 6000° K".

Avantageusement, l'intensité des sources 6 et 7 est réglable. La voûte 4 a la forme d'une portion de cylindre ou d'une portion paraboloïde et en général d'une surface continue à rayon constant ou à rayon variable de façon monotone et continue.

Cette cabine possède un poste d'observation 9, constitué par une passerelle disposée transversalement par rapport à la direction F, passerelle sur laquelle et au centre de laquelle se tient un observateur 10. Cette passerelle est par exemple située environ 50 cm audessus du plan du substrat 2.

La position de la passerelle 9 est telle que l'oeil de l'observateur 10 voit la partie 5 du substrat 2 à contrôler sous un angle d'incidence moyen de l'ordre de 30°. Cet angle moyen est l'angle que fait avec la normale le rayon issu de l'oeil de l'observateur en direction du centre de la partie 5.

L'observation peut se faire sur des plaques de verre immobiles, mais également sur un ruban de verre revêtu défilant selon la flèche F à des vitesses pouvant atteindre 20 m/min. Pour laisser à l'observateur 10 le temps d'apprécier la qualité de la couche, une longueur de 3m placée dans les conditions d'observation est souhaitable.

Avantageusement pour faciliter l'appréciation de la qualité du revêtement du substrat 2 par l'observateur 10, un échantillon 11 de référence est disposé face à lui, sur fond noir, au-dessus du substrat 2 à apprécier, sous une incidence voisine de celle sous laquelle l'observateur 10 voit le substrat 2.

Les parois latérales de la cabine 1, non visibles sur la figure, ne doivent pas se réfléchir sur le substrat à observer. De préférence elles sont verticales, de la même couleur que la voûte 4 de la cabine 1 et disposées à la limite de la largeur du substrat 2 à contrôler.

De préférence l'observateur 10 se situe au milieu de la passerelle 9, ce qui lui permet d'apprécier de chaque côté de lui des largeurs de substrat de l'ordre de 1, 50 à 2m.

De préférence pour éviter toute influence néfaste due à l'éclairement de l'environnement, la totalité de la cabine est fermée, notamment derrière l'observateur par des parois 12.

Cette cabine permet l'appréciation de la qualité de revêtements d'épaisseurs interférentielles, sur des substrats en verre, mais elle permet a fortiori des observations d'autres substrats transparents ou non, dans les conditions du jour extérieur, lesdits substrats étant fixés ou au contraire défilant.

## Revendications

1. Cabine de contrôle (1) de la qualité de substrats (2) en verre revêtus de couches minces d'oxyde métallique par observation du substrat sous un angle d'incidence moyen de l'ordre de 30°, cet angle moyen étant l'angle que fait, avec la normale au substrat, le rayon issu de l'oeil de l'observateur en direction du centre de la partie du substrat à observer, caractérisée en ce qu'elle comprend:

une voûte (4) surplombant le substrat (2) revêtu à observer et s'y réfléchissant, cette voûte (4) étant continue, courbée, de rayon de courbure variable de façon monotone et continue ou constante, recouverte d'un revêtement opaque mât diffusant, de couleur neutre proche en reflexion de l'illuminant $D_{65}$ de la C.I.E., éclairée de façon uniforme par des sources (6, 7) de longueur d'onde dominante proche de celle de l'illuminant $D_{65}$.

un poste d'observation (9) en regard de la voûte (4) tel qu'un observateur (10) qui y est situé voit le substrat (2) à observer sous l'angle d'indicence moyen de l'ordre de 30°.

2. Cabine selon la revendication 1, caractérisée en ce que le sol de la cabine (1) sur lequel se trouve le substrat (2) est absorbant et de préférence noir.

3. Cabine selon l'une des revendications 1 ou 2, caractérisée en ce que la zone (5) du substrat (2) livrée au contrôle de l'observateur (10) et sur laquelle se réfléchit la voûte (4) a une longueur de l'ordre de 3m.

4. Cabine selon l'une des revendications 1 à 3, caractérisée en ce que l'éclairement de la voûte (4) est à intensité variable.

5. Cabine selon l'une des revendications 1 à 4, caractérisée en ce qu'un échantillon de référence (11) est placé face à l'observateur (10) au-dessus du substrat (2) à contrôler de façon à ce que l'observateur (10) le voit sous un angle d'incidence du même ordre de grandeur que celui sous lequel il voit le substrat (2) à contrôler.

6. Cabine selon l'une des revendications précédentes, caractérisée en ce que le poste d'observation (9) est sensiblement au milieu de la largeur du substrat (2) à contrôler, ce substrat (2) ayant une largeur totale inférieure ou égale à 4m.

7. Cabine selon l'une des revendications précédentes, caractérisée en ce que ses parois latérales sont verticales et de même couleur que la voûte (4).

8. Cabine selon l'une des revendications précédentes, caractérisée en ce qu'elle est totalement close.

9. Utilisation de la cabine (1) selon les revendications précédentes pour le contrôle de couches d'épaisseurs interférentielles déposées sur un substrat (2) en verre.

10. Utilisation selon la revendication 9 pour le contrôle de couches disposées sur un ruban de verre défilant en continu dans ladite cabine (1).

**Patentansprüche**

1. Kabine (1) zur Qualitätskontrolle von mit dünnen Metalloxidschichten überzogenen Glassubstraten (2) durch Beobachtung des Substrates unter einem mittleren Einfallwinkel von 30°, wobei dieser mittlere Winkel derjenige Winkel ist, der zusammen mit der Senkrechten auf dem Substrat den vom Auge des Beobachters in Richtung des Zentrums des zu beobachtenden Substratteils ausgehenden Bereich bestimmt, dadurch gekennzeichnet, daß die Kabine umfaßt:

ein das zu beobachtende beschichtete Substrat (2) überspannende und sich darin spiegelndes Gewölbe (4), wobei dieses Gewölbe (4) durchgehend und gekrümmt ist und einen monoton und kontinuierlich oder konstant veränderlichen Krümmungsradius aufweist, und mit einem lichtundurchlässigen, matten, diffundierenden Überzug von neutraler Färbung überzogen ist, deren Reflexion derjenigen der Lichtart D 65 von C.I.E. nahekommt, und welche von den Lichtquellen (6, 7), deren maßgebende Wellenlänge jener der Lichtart D 65 nahekommt, gleichmäßig beleuchtet ist,

einen gegenüber des Gewölbes (4) derart plazierten Beobachtungsstand (9), daß ein dort postierter Beobachter (10) das zu beobachtende Substrat (2) unter einem mittleren Einfallswinkel von 30° sieht.

2. Kabine gemäß Anspruch 1, dadurch gekennzeichnet, daß der Boden der Kabine (1), auf welchem sich das Substrat (2) befindet, absorbierende Eigenschaften aufweist und vorzugsweise schwarz gefärbt ist.

3. Kabine gemäß einem der Ansprüche 1 oder 2, dadurch gekennzeichnet, daß der zur Kontrolle durch den Beobachter (10) bestimmte Bereich (5) des Substrats (2), in welchem sich das Gewölbe (4) spiegelt, eine Länge in einer Größenordnung von 3m aufweist.

4. Kabine gemäß einem der Ansprüche 1 bis 3, dadurch gekennzeichnet, daß die Stärke der Beleuchtung des Gewölbes (4) variabel ist.

5. Kabine gemäß einem der Ansprüche 1 bis 4, dadurch gekennzeichnet, daß eine Referenzprobe (11) gegenüber dem Beobachter (10) oberhalb des zu prüfenden Substrats (2) plaziert wird, so daß der Beobachter (10) dieses unter einem Einfallwinkel von der gleichen Größenordnung wie der Winkel, unter dem er das zu prüfende Substrat betrachtet, sieht.

6. Kabine gemäß einem der vorhergehenden Ansprüche, dadurch gekennzeichnet, daß der Beobachtungsstand (9) ungefähr in der Mitte der Breite des zu kontrollierenden Substrats (2) plaziert ist, wobei dieses Substrat (2) eine Gesamtbreite von 4 m oder weniger aufweist.

7. Kabine gemäß einem der vorhergehenden Ansprüche dadurch gekennzeichnet, daß deren Seitenwände vertikal angeordnet sind und die gleiche Farbe aufweisen wie das Gewölbe (4).

8. Kabine gemäß einem der vorhergehenden Ansprüche, dadurch gekennzeichnet, daß sie vollständig geschlossen ist.

9. Verwendung der Kabine (1) gemäß den vorhergehenden Ansprüchen zur Kontrolle der Interferenzschichtstärken der auf das Glassubstrat (2) aufgebrachten Schichten.

10. Verwendung gemäß Anspruch 9 zur Kontrolle der Schichten, die auf einem die Kabine (1) kontinuierlich durchlaufenden Glasband angeordnet sind.

**Claims**

1. Inspection room (1) for the quality of substrates (2) of glass coated with thin layers of metallic oxide, by observation of the substrate at a mean angle of incidence of the order of 30°, this mean angle being the angle which an imaginary line from the eye of the observer towards the centre of the part of the substrate to be observed makes with the perpendicular to the substrate, characterized in that the room comprises:

a vault (4) overhanging the coated substrate (2) to be observed and reflected in it, this vault (4) being continuous, curved with a radius of curvature variable in a monotonous and continuous or constant manner, and being covered with a diffusing, matt, opaque coating, of a neutral colour close in reflection to the illuminant $D_{65}$ of the International Commission on Illumination (C.I.E.), illuminated in a uniform manner by sources (6, 7) having a dominant wavelength near that of the illuminant $D_{65}$,

an observation station (9) opposite the vault (4), such that an observer (10) situated therein sees the substrate (2) to be observed at a mean angle of incidence of the order of 30°.

2. Room according to Claim 1, characterized in that the floor of the room (1) on which the substrate (2) is situated is absorbant and preferably black.

3. Room according to one of Claims 1 or 2, characterized in that the zone (5) of the substrate (2) made available for the inspection by the observer (10) and on which the vault (4) is reflected has a length of the order of 3m.

4. Room according to one of Claims 1 to 3, characterized in that the illumination of the vault (4) is of variable intensity.

5. Room according to one of Claims 1 to 4, characterized in that a reference specimen (11) is placed opposite the observer (10) and above the substrate (2) to be inspected in such a manner that the observer (10) sees it at an angle of incidence of the same order of size as that at which he sees the substrate (2) to be inspected.

6. Room according to one of the preceding Claims, characterized in that the observation station (9) is substantially at the centre of the width of the substrate (2) to be inspected, this substrate (2) having a total width less than or equal to 4m.

7. Room according to one of the preceding Claims, characterized in that its lateral walls are vertical and of the same colour as the vault (4).

8. Room according to one of the preceding Claims, characterized in that it is entirely closed.

9. Use of the room (1) according to the preceding Claims for the inspection of layers of interferential thicknesses deposited on a substrate (2) of glass.

10. Use according to Claim 9 for the inspection of layers disposed on a band of glass moving continuously through said room (1).

EP 0 175 622 B1